# EUROPEAN PATENT SPECIFICATION

(11) **EP 0 527 242 B1**
(45) Date of publication and mention of the grant of the patent: **26.04.1995**
(21) Application number: 91112985.6
(22) Date of filing: 02.08.1991
(51) Int. Cl.: G01N 21/88, G02B 21/14

(54) **Inspection apparatus and method for inspection of substrates**
Apparat und Methode zur Inspektion eines Substrates
Appareil et méthode pour inspecter un substrat

(43) Date of publication of application: 17.02.1993
(73) Proprietor: International Business Machines Corporation, Armonk, N.Y. 10504 (US)
(72) Inventor: Boehmer, Gudrun, W-7000 Stuttgart 80 (DE)
(74) Representative: Schäfer, Wolfgang, Dipl.-Ing.

(56) References cited:
- EP-A- 0 410 634
- US-A- 2 944 463
- US-A- 4 689 491
- IBM TECHNICAL DISCLOSURE BULLETIN. vol. 19, no. 10, March 1977, NEW YORK US pages 3936 - 3936; W.M. STOBBS: 'ENHANCEMENT OF DEFECT VISIBILITY IN OPTICAL BIREFRINGENT IMAGES'

## Description

The invention relates to an inspection apparatus and a method for inspection of substrates.

Various industries use coating and deposition techniques to provide layers with special protective, optical, magnetic or electrical properties. Inspection methods and suitable inspection apparatus are necessary to detect and visualize different kinds of defects which may be found on, within or below the layers.

DE 38 19 604 A1 discloses a method to produce phase contrast images of an object. Unlike the known phase contrast method of Zernicke which is used in conventional microscopes this method is especially developped for scanning microscopes.

Another possibility to enhance the defect visibility is described in the IBM Technical Disclosure Bulletin, Vol. 19, No. 10, March 1977, p. 3963. By the application of stress a different background intensity is given to defects in crystals which leads to a more clearly apparent defect image. Here a quarter-wave plate can be used to quantify the strain field of a dislocation by noting how the contrast changed as function of background and transmitted intensity.

IBM Technical Disclosure Bulletin, Vol. 27, No.12, May 1985, p. 6999 shows an automated defect inspection system for particulate contamination and metallization defects on semiconductor wafers. This system combines automated loading and transporting means with low and high magnification capability for event detection and means for cataloguing and storing the event detected.

All these methods need either a special apparatus like a scanning microscope (US-PS 4689491) or a special pretreatment of the substrate to be inspected like stress application. Most of them are capable of detecting only special kinds of defects like metallization defects.

It is an object of the present invention to provide an inspection apparatus and a method for inspection of substrates which easily allow to detect and visualize different kinds of defects.

This object and further positive effects are achieved by the invention as claimed.

An inspection apparatus for inspection of substrates contains a phase plate which directly faces the substrate to be inspected. The phase plate is arranged in the beam path in a way that the illuminating beam and the return beam are both passing through it and it is adjustable to allow detection of defects. Adjusting the phase plate in the beam path allows to detect and visualize defects of the substrate.

The advantages offered by the invention are mainly that the inspection apparatus allows to detect different kinds of defects without any pretreatment of the substrate. These different kinds of defects may be very thin residual layers of media or particles of small size and unfavourable shape. Detection of these defects is possible even if they have nearly the same refraction index as compared to the underlying layer.

Other types of defects detectable with the inspection apparatus or the method of the present invention are inclusions of impurities in thin transparent films or surface damages of coatings like small scratches or cracks due to stress.

According to another aspect of the present invention the inspection apparatus is integrated into a process tool. This allows inspecting the substrate directly after processing within the process tool. Additional handling of the substrate e.g.loading/unloading and transporting is avoided. This leads to a reduction of substrate contamination and damage since for inspection the substrate is not leaving the cleanroom environment of the process tool and is thus protected against operator contact.

The apparatus for inline-inspection does not disturb the continuous process flow especially in a cleanroom manufacturing area, is easily exchangeable and may be employed for inspecting the process results of various process tools.

Ways of carrying out the invention are described in detail below with reference to drawings showing only a specific embodiment in which:
- Fig.1: gives a schematic cross-sectional view of a preferred embodiment of the inspection apparatus for inspection of substrates and
- Figs.2 A - D: all show the same area of a substrate with different kinds of defects detected and made visible with the method and apparatus of the invention as claimed.

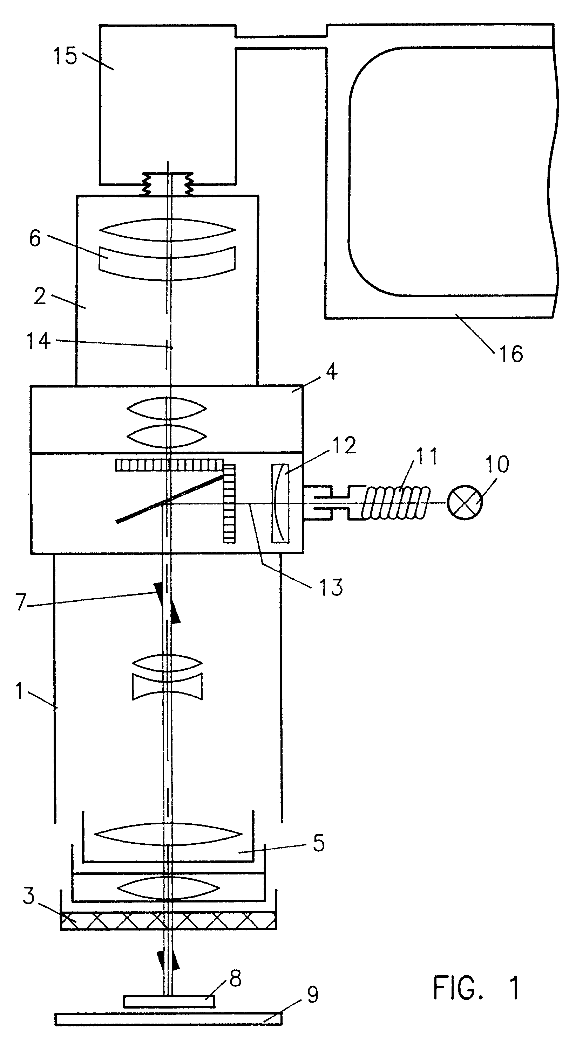

The cross-sectional view of Fig.1 shows a single tube microscope as a preferred embodiment of the inspection apparatus. The essential components of the microscope body are a zoom objective 1, a zoom eyepiece 2 and a phase plate 3. Both, the zoom objective 1 and the zoom eyepiece 2 are separately controllable by a keyboard. They are connected by an interposed optical coupler 4. The zoom objective 1 and the zoom eyepiece 2 have a lens balancing system 5,6 and the zoom objective 1 further contains a diaphragm 7.

The phase plate 3 is fixed to the zoom objective 1 as a sort of supplementary lens. It is adapted to the optical system without changing the theoretical focal point of the optical system as a whole. The phase plate 3 directly faces the substrate 8 to be inspected.

The phase plate 3 comprises several kinds of phase plates like half-wave plates or quarter-wave plates. In a preferred embodiment the phase plate is a quarter-wave plate. The substrate 8 is positioned on a X-Y scanning table 9. The scanning table 9 is not linked to the optical system. It is computer-controlled and may easily be brought into the right position.

Incident light illumination is provided by a light source 10 and is brought into the microscope body by a light guide 11. The light source 10 may be a cold-light illuminator or the like and the light guide 11 comprises a coaxial or a fiber optic cable. The light emitted from the light source 10 and transported by the light guide 11 into the microscope body there passes a collector lens system 12. It also passes polarizer means changing the light into a linearly polarized illuminating beam 13. The phase plate 3 is arranged in the beam path in a way that the illuminating beam 13 and the return beam 14 are both passing through the phase plate 3.

The phase plate 3 is adjustable to allow detection of different kinds of defects. One possibility of adjusting the phase plate is slowly rotating it around an axis parallel to the beam path until it reaches a suitable angular position. The rotation may be carried out manually or it may be motor driven to continuously achieve very small angle variations.

For storing and visualizing the defects detected a recording system like a television camera 15, preferably a high performance coulour TV, and a high resolution monitoring system 16 like a colour video monitor are connected to the microscope body.

For inspection, a substrate 8 is positioned on the scanning table 9. The substrate 8 may be a ceramic substrate, a glass ceramic substrate, a wafer, a card, a board, a photolithography mask, a screen or the like. The substrate 8 is illuminated with the linearly polarized light of illuminating beam 13. Before illuminating the substrate 8, the illuminating beam 13 passes through a phase plate 3, preferably a quarter-wave plate. The image of the part of the substrate 8 under investigation may be seen on the colour video monitor 16. With the normal vertical bright field illumination there is nothing to be seen on the substrate which indicates the presence of defects like particles or residues. Starting to slowly rotate the quarter-wave plate around an axis parallel to the beam path to a suitable angular position suddenly makes visible defects which have not even been expected in this part of the substrate. Going on with the slow rotation of the quarterwave-plate leads to astonishing images of the substrate under investigation. Without changing any other parameters of the inspection apparatus except the angular position of the quarter-wave plate, completely new and unexpected views of the substrate are to be observed on the coulour video monitor 16. By simply rotating the quarter-wave plate very slowly, the rotation being carried out manually or motor driven, various other kinds of defects as those seen before are revealed and made visible. The kind of defects to be detected clearly depends on the angular position of the quarter-wave plate.

At a determined angular position of the quarter-wave plate particles on the surface of the substrate, even transparent particles, are illuminated in a way that they light up and become visible with the illumination strongly reminding a dark-field illumination. Again it has to be noted that nothing has been changed within the inspection apparatus except the angular position of the quarter-wave plate. Thus, by rotating the quarter-wave plate until it reaches a determined rotational position, a sort of artificial dark-field illumination has been produced.

The method as described above does not only allow to visualize particles on the surface of a substrate. By rotating the quarter-wave plate there are angular positions to be found at which inclusions in or under a layer coating the substrate under inspection are detected. With this method especially inclusions in thin transparent films are made visible and also very thin scratches or cracks due to stress in the underlying layer are detectable.

There are other angular positions where metal residues on a metal layer like a conducting line suddenly become clearly visible. Observing these defects on the coulour video monitor 16 is absolutely overwhelming since with other defect detection methods it is not possible to detect metal residues on a material surface with nearly the same refraction index.

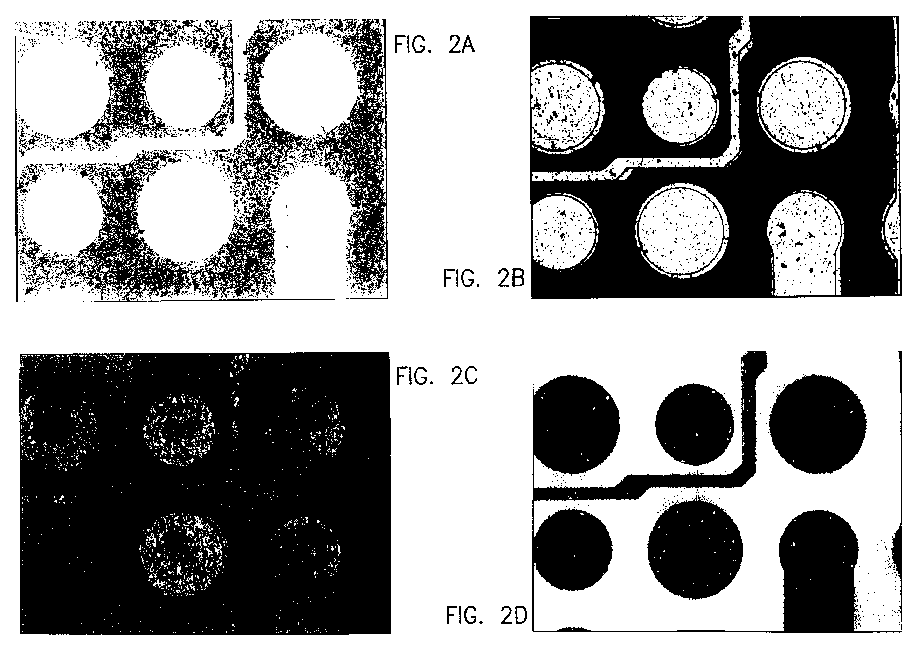

An example of the extraordinary possibilities of the inspection apparatus and method of the present invention give Figs. 2A -2D. They all show the same area of a substrate with the same magnification factor and the same parameters of the inspection apparatus except the angular position of the quarter-wave plate 3.

In Fig. 2A the observer looks onto the surface of a metal layer. On the metal layer one can see conducting lines made of metal. With the chosen angular position of the quarter-wave plate in this image the conducting lines appear very bright. In the metal layer there are particles to be seen which appear as dark spots. In this image the illumination is similar to a bright field illumination.

With another angular position of the quarter-wave plate in Fig. 2B there are metal residues to be seen which could not be detected with the angular position of the quarter-wave plate in Fig. 2A. The metal residues are lying within the conducting lines.

In Fig. 2C the angular position of the quarter-wave plate has been changed slightly thus providing an even better contrast between the metal residues and the metal of the conducting lines.

Fig. 2D strongly reminds to an image produced by dark-field illumination. With the chosen angular position of the quarter-wave plate for this image a sort of artificial dark-field illumination has been simulated without changing anything else within the optical or illumination system of the inspection apparatus. In this image particles lying on the surface of the conducting lines light up.

Figs. 2A-2D thus give an idea of the tremendous capability of detecting different kinds of defects on,in or under a layer or substrate in a very simple and easy way. The optical magnification factor here was as low as 16 whereas in a conventional microscope a magnification factor of about 500 is necessary to achieve images of the quality of those described above. With the special assembly of the inspection apparatus the magnifying power of the system as a whole here is as high as about 1000 without having to fight with several optical defects like aberrations arising when increasing the optical magnification.

Since the inspection apparatus is very compact and with the inspection method allowing to detect various kinds of defects the apparatus may easily be integrated into any process tool like an etch apparatus or a photoresist developper unit. The substrates being etched or developped thus may be inspected directly after being processed without any additional unloading, loading and transporting steps. This offers a lot of advantages especially if the manufacturing process has to be carried out under cleanroom conditions or if the product is very sensitive to any contamination. By avoiding additional handling and operator contact when inspecting the substrates an evident reduction of substrate contamination and damage is observable since the substrate is not leaving the cleanroom area of the process tool.

The inspection apparatus integrated e.g. into an etch tool may be used to control the metal etch results. Knowing the angular position of the quarter-wave plate at which metal residues are clearly visible this angular position has to be fixed and for control purpuses the substrate has to be scanned either automatically or manually by use of a scanning table 9.

To control the particles added to the surface of a substrate an inspection apparatus has to be integrated into the respective tool with its quarter-wave plate fixed with the appropriate angular position to detect particles on a surface.

The inspection apparatus may be employed for inspection within various process tools, it is easily exchangeable and, in contrary to most of the conventional inspection methods, the inline-inspection does not disturb the continuous process flow which is of outstanding importance in cleanroom manufacturing areas. With its capability of detecting various kinds of defects on, in or below layers the inspection apparatus is also a highly sensitive stand-alone defect detection tool.

## Claims

1. Inspection apparatus for inspection of substrates (8) comprising, a single tube microscope with a zoom objective (1) and a zoom eyepiece (2), said zoom objective (1) and said zoom eyepiece (2) being controllable separately with means for incident light illumination or means for light guide illumination (11) like fiber optic means, with a light source (10) comprising a cold-light illuminator with a phase plate (3), wherein said phase plate (3) is arranged in the beam path in a way that the illuminating beam (13) and the return beam (14) are both passing through said phase plate (3),
- with said illuminating beam (13) being a linear polarized beam
- with said phase plate (3) directly facing the substrate (8) to be inspected without any components between said phase plate (3) and the substrate to be inspected,
- with said phase plate (3) being adjustable comprising said phase plate (3) being rotatable around an axis parallel to the beam path to allow detection of defects, and wherein said phase plate (3) is a quarter-wave plate.

2. Inspection apparatus for inspection of substrates according to claim 1 wherein
said quarter-wave plate (3) is fixed to the objective (1) lens of said single tube microscope.

3. Inspection apparatus for inspection of substrates according to claim 1 or 2 wherein
said quarter-wave plate (3) is motor driven.

4. Inspection apparatus for inspection of substrates according to any of the preceding claims 1 to 3 wherein said inspection apparatus further comprises
- a recording system (15) like a television camera
- a high resolution monitoring system (16) and
- a data storage and data processing system.

5. Inspection apparatus for inspection of substrates according to any of the preceding claims 1 to 4 wherein
said inspection apparatus is integrated into a process tool in a way that the inspection of said substrates (8) processed by said process tool is carried out within said process tool by said inspection apparatus directly after processing said substrates (8).

6. Method for inspection of substrates using an inspection apparatus according to claims 1 to 5, comprising the steps of
- passing a linear polarized illuminating beam (13) and the return beam (14) through a phase plate (3) directly facing the substrate (8) to be inspected without any components be-tween the phase plate (3) and the substrate (8)
- detecting and visualizing defects of said substrate (8) by adjusting said phase plate (3) wherein said adjusting a phase plate (3) comprises rotating a quarter-wave plate around an axis parallel to the beam path until it reaches a suitable angular position.

7. Method for inspection of substrates according to claim 6 wherein
said inspection is carried out within a process tool by an inspection apparatus integrated into said process tool and wherein
said inspection is carried out directly after processing said substrate (8) with said process tool.

8. Method for inspection of substrates according to claim 6 or 7 wherein
said substrate (8) comprises wafers, ceramic substrates, glass ceramic substrates, cards, boards, masks or screens.

## Patentansprüche

1. Inspektionsapparat zur Inspektion von Substraten (8), ein Mikroskop mit einem Tubus mit einem Zoom-Objektiv (1) und einem Zoom-Okular (2) umfassend, wobei das genannte Zoom-Objektiv (1) und das genannte Zoom-Okular (2) mit Mitteln zur Auflichtbeleuchtung oder Mitteln zur Lichtleiterbeleuchtung (11), wie faseroptische Mittel, getrennt steuerbar sind, mit einer Lichtquelle (10), eine Kaltlichtquelle mit einer Phasenplatte (3) umfassend, bei der die genannte Phasenplatte (3) in dem Strahlengang in der Weise angeordnet ist, daß der Beleuchtungsstrahl (13) und der Rückstrahl (14) beide durch die genannte Phasenplatte (3) hindurchgehen,
- wobei der genannte Beleuchtungsstrahl (13) ein linear polarisierter Strahl ist;
- wobei die genannte Phasenplatte (3) dem zu prüfenden Substrat (8) direkt gegenüberliegt, ohne daß sich andere Komponenten zwischen der genannten Phasenplatte (3) und dem zu prüfenden Substrat befinden;
- wobei die genannte Phasenplatte (3) einstellbar ist und um eine Achse parallel zum Strahlengang gedreht werden kann, um ein Erkennen von Mängeln zu ermöglichen, und wobei die genannte Phasenplatte (3) ein Lambda-Viertelplättchen ist.

2. Inspektionsapparat zur Inspektion von Substraten gemäß Anspruch 1, bei dem
das genannte Lambda-Viertelplättchen (3) an der Linse des Objektivs (1) des genannten Mikroskops mit einem Tubus befestigt ist.

3. Inspektionsapparat zur Inspektion von Substraten gemäß Anspruch 1 oder 2, bei dem
das genannte Lambda-Viertelplättchen (3) motorisch angetrieben wird.

4. Inspektionsapparat zur Inspektion von Substraten gemäß jedem der vorangehenden Ansprüche 1 bis 3, wobei der genannte Inspektionsapparat weiter folgendes umfaßt:
- ein Aufzeichnungssystem (15), zum Beispiel eine TV-Kamera
- ein hochauflösendes Überwachungssystem (16) und
- ein Datenspeicher- und Datenverarbeitungssystem.

5. Inspektionsapparat zur Inspektion von Substraten gemäß jedem der vorangehenden Ansprüche 1 bis 4, bei dem
der genannte Inspektionsapparat in ein Prozeßwerkzeug in der Weise integriert ist, daß die Inspektion der genannten Substrate (8), welche mit dem genannten Prozeßwerkzeug bearbeitet werden, innerhalb des genannten Prozeßwerkzeuges durch den genannten Inspektionsapparat direkt nach der Bearbeitung der genannten Substrate (8) ausgeführt wird.

6. Methode zur Inspektion von Substraten mit einem Inspektionsapparat gemaß Anspruch 1 bis 5, folgende Schritte umfassend:
- Durchführen eines linearen polarisierten Beleuchtungsstrahls (13) und des Rückstrahls (14) durch eine Phasenplatte (3), welche einem zu prüfenden Substrat (8) direkt gegenüberliegt, ohne irgendwelche andere Komponenten zwischen der Phasenplatte (3) und dem Substrat (8);
- Erkennen und Sichtbarmachen von Fehlern des genannten Substrats (8) durch Einstellen der genannten Phasenplatte (3), wobei diese Einstellung einer Phasenplatte (3) das Drehen eines Lambda-Viertelplättchens um eine Achse parallel zum Strahlengang umfaßt, bis es eine geeignete Winkelposition erreicht.

7. Methode zur Inspektion von Substraten gemäß Anspruch 6, bei der
die genannte Inspektion innerhalb eines Prozeßwerkzeuges durch einen in das genannte Prozeßwerkzeug integrierten Inspektionsapparat ausgeführt wird, und bei der
die genannte Inspektion direkt nach Bearbeitung des genannten Substrats (8) mit dem genannten Prozeßwerkzeug ausgeführt wird.

8. Methode zur Inspektion von Substraten gemäß Anspruch 6 oder 7, bei der
das genannte Substrat (8) Wafer, keramische Substrate, Glas-Keramik-Substrate, Karten, Platten, Masken oder Siebe umfaßt.

## Revendications

1. Appareil de vérification pour la vérification de substrats (8), comprenant un microscope à tube unique avec un objectif à distance focale variable (1) et un oculaire à distance focale variable (2), ledit objectif à distance focale variable (1) et ledit oculaire à distance focale variable (2) pouvant être commandés séparément avec un moyen pour l'éclairage par lumière incidente ou un moyen pour l'éclairage par guide de lumière (11) tel qu'un moyen optique à fibre, la source de lumière (10) comprenant une source de lumière froide avec une lamelle de phase (3), ladite lamelle de phase (3) étant disposée dans le trajet du faisceau de manière que le faisceau d'éclairage (13) et le faisceau de retour (14) traversent tous deux ladite lamelle de phase (3),
- ledit faisceau d'éclairage (13) étant un faisceau polarisé linéaire
- ladite lamelle de phase (3) étant directement en regard du substrat (8) à vérifier sans composant entre ladite lamelle de phase (3) et le substrat à vérifier,
- ladite lamelle de phase (3) étant réglable et comprenant ladite lamelle de phase (3) pouvant tourner autour d'un axe parallèle au trajet du faisceau pour permettre la détection de défauts, et dans lequel ladite lamelle de phase (3) est une lamelle quart d'onde.

2. Appareil de vérification pour la vérification de substrats selon la revendication 1 dans lequel
ladite lamelle quart d'onde (3) est fixée à l'objectif (1) dudit microscope à tube unique.

3. Appareil de vérification pour la vérification de substrats selon la revendication 1 ou 2 dans lequel
ladite lamelle quart d'onde (3) est entraînée par moteur.

4. Appareil de vérification pour la vérification de substrats selon l'une quelconque des revendications précédentes 1 à 3 dans lequel ledit appareil de vérification comporte en outre
- un système d'enregistrement (15) tel qu'une caméra de télévision
- un système de surveillance à haute définition (16) et
- une mémoire de données et un système de traitement de données.

5. Appareil de vérification pour la vérification de substrats selon l'une quelconque des revendications précédentes 1 à 4 dans lequel
ledit appareil de vérification est intégré dans un outil de traitement de sorte que la vérification dedits substrats (8) traités par ledit outil de traitement est réalisée dans ledit outil de traitement par ledit appareil de vérification directement après le traitement desdits substrats (8).

6. Procédé pour la vérification de substrats utiisant un appareil de vérification selon les revendications 1 à 5, comprenant les étapes suivantes
- faire passer un faisceau d'éclairage polarisé linéairement (13) et le faisceau de retour (14) à travers une lamelle de phase (3) directement en regard d'un substrat (8) à vérifier, sans composants entre la lamelle de phase (3) et le substrat (8)
- détecter et visualiser des défauts dudit substrat (8) en réglant ladite lamelle de phase (3), ledit réglage de la lamelle de phase (3) consistant à faire tourner une lamelle quart d'onde autour d'un axe parallèle au trajet du faisceau jusqu'à ce qu'il atteigne une position angulaire convenable.

7. Procédé pour la vérification de substrats selon la revendication 6 dans lequel
ladite vérification est effectuée dans un outil de traitement par un appareil de vérification intégré dans ledit outil de traitement et dans lequel
ladite vérification est effectuée directement après traitement dudit substrat (8) avec ledit outil de traitement.

8. Procédé pour la vérification de substrats selon la revendication 6 ou 7 dans lequel
ledit substrat (8) comporte des plaquettes, des substrats en céramique, des substrats en vitrocéramique, des cartes, des panneaux, des masques ou des écrans.
